# EUROPEAN PATENT APPLICATION

(11) **EP 3 389 295 A1**
(43) Date of publication of application: **17.10.2018**
(21) Application number: 16808546.2
(22) Date of filing: 03.08.2016
(51) Int. Cl.: H04W 8/26, H04W 8/02

(54) **MULTI-TERMINAL MAPPING SYSTEM AND METHOD FOR VIRTUAL SIM CARD**

(30) Priority: 09.12.2015 CN 201510909561
(71) Applicant: Huizhou TCL Mobile Communication Co., Ltd., Huizhou, Guangdong 516006 (CN)
(72) Inventor: GUO, George, Huizhou City Guangdong 516006 (CN); HU, Stan, Huizhou City Guangdong 516006 (CN); ZHAO, Shiqing, Huizhou City Guangdong 516006 (CN)
(74) Representative: ZHAOffice SPRL
(86) International application number: PCT/CN2016/093043
(87) International publication number: WO 2017/096928

(57) **Abstract**

A multi-terminal mapping system associated with a virtual SIM card and the associated method is disclosed. The disclosed system includes a terminal device, a cloud for storing one or more virtual SIM cards, and a server. When a payment is successful, the server establishes a subscription relation between a user ID and a virtual SIM card identifier and transmits a subscription success message to the terminal device. When a request for connecting to the virtual SIM card is authenticated, the terminal device connects with the virtual SIM card to simplify a procedure for sharing a single virtual SIM card among multiple terminal devices.

## Description

### TECHNICAL FIELD

The present disclosure generally relates to the field of communication technology, and more particularly, to a multi-terminal mapping system associated with a virtual Subscriber Identity Module (SIM) card and the method thereof.

### BACKGROUND

Presently, with the rapid development of communication technology and mobile terminals, even ordinary users can possess a number of mobile devices, such as multiple mobile phones and tablet PCs. As a result, users have found the needs to share a single SIM card among multiple mobile terminals. For a user using a physical SIM card, if a SIM card is to be shared among multiple mobile terminals, it is necessary to manually unmount the physical SIM card from one terminal and install the SIM card into another mobile terminal. Manually uninstalling and installing a physical SIM card can be a hassle. In particular, if the user has to frequently switch a single physical SIM card among multiple mobile terminals, the switching operation can become an extremely annoyance for the user.

### SUMMARY

A principal technical problem to be addressed by the disclosure is to provide a multi-terminal mapping system based on a virtual SIM card and the associated method, thereby simplifying the process of sharing a single virtual SIM card among multiple terminals.

According to an aspect of the disclosure, a multi-terminal mapping system associated with a virtual SIM card is disclosed. This virtual-SIM-card based multi-terminal mapping system includes: a terminal device, which further includes a first transceiver, a first processor, and a first bus, the first transceiver and the first processor are both coupled to the first bus; a server, which further includes a second transceiver, a second processor, and a second bus, the second transceiver and the second processor are both coupled to the second bus; and a cloud configured to store one or more virtual SIM cards.

Specifically, the first processor is configured to generate a request for subscribing to a virtual SIM card; the first transceiver is configured to send the request for subscribing to the virtual SIM card; the second transceiver is configured to receive the request for subscribing to the virtual SIM card, the request for subscribing to the virtual SIM card includes an user ID and a virtual SIM card identifier. The second processor is configured to generate an order based on the user ID and the virtual SIM card identifier associated with the request for subscribing to the virtual SIM card and send an order number of the order to the first transceiver via the second transceiver, the order includes the user ID and the virtual SIM card identifier.

Specifically, the first processor is configured to generate a payment request based on the order number, and the first transmitter is configured to send the payment request to a third-party payment server for performing the payment. The second transceiver is configured to receive a payment result notification from the third-party payment server as a feedback to the payment request, both the payment request and the payment result notification include the order number, and the second processor is further configured to determine whether the payment is successful based on the payment result notification.

When the payment is successful, the second processor is configured to obtain the user ID and the virtual SIM card identifier from the corresponding order based on the order number, and subsequently establish a subscription relationship between the user ID and the virtual SIM card identifier. The second processor is further configured to generate a subscription-success message based on the subscription relationship and send the subscription-success message to the terminal device via the second transceiver. When the first transceiver receives the subscription-success message, the first processor is further configured to generate a request for connecting to the virtual SIM card, and the first transceiver is configured to send the request for connecting to the virtual SIM card to the second transmitter.

Specifically, the second processor is further configured to determine whether the request for connecting to the virtual SIM card has been authenticated, and when the second processor determines that the request for connecting to the virtual SIM card has been authenticated, the second processor is configured to generate a connection-request-success message and send the connection-request-success message to the first transceiver via the second transceiver. The first processor is further configured to connect to the virtual SIM card in response to the connection-request-success message. However, when the second processor determines that the request for connecting to the virtual SIM card has not been authenticated, the second processor is configured to generate a connection-request-failure message and send the connection-request-failure message to the first transceiver via the second transceiver.

When the payment is not successful, the second processor is further configured to generate a continue-to-pay or a cancel-the-order message and send the continue-to-pay or cancel-the-order message to the first transceiver via the second transceiver.

In some embodiments, the second processor is configured to generate a random code based on the request for connecting to the virtual SIM card and the second transceiver is configured to send the random code to the virtual SIM card. The virtual SIM card is configured to generate a result based on the received random code and the second transceiver is configured to receive the result. The second processor is configured to compare the received result with pre-stored information to determine whether they match. When the second processor determines that the received result matches the pre-stored information, the second transceiver is configured to send the connection-request-success message to the first transceiver; when the second processor determines that the received result does not match the pre-stored information, the second transceiver is configured to send the connection-request-failure message to the first transceiver.

In some embodiments, the user ID includes one or more of: a username; gender; ID card information; and fee account information. The SIM card identifier includes one or more of: a card number; a secret key, and authorization information. In some embodiments, the terminal device includes: a mobile phone, a wearable device, a tablet, a computer, or a vehicle-based system.

According to another aspect of the disclosure, a method for performing multi-terminal mapping of a virtual SIM card by a server is provided. The method includes: the server storing one or more virtual SIM card in the cloud; the server receiving a request for connecting to the virtual SIM card from a terminal device; the server determining whether the request for connecting to the virtual SIM card is authenticated; when the request for connecting to the virtual SIM card is authenticated, the server sending a connection-request-success message to the terminal device for connecting the terminal device with the virtual SIM card; and when the request for connecting to the virtual SIM card is not authenticated, the server sending a connection-request-failure message to the terminal device.

In some embodiments, the step of the server determining whether the request for connecting to the virtual SIM card is authenticated further includes: the server generating a random code based on the request for connecting to the virtual SIM card and sending the random code to the virtual SIM card; the server receiving a result generated in response to the random code from the virtual SIM card; the server comparing the received result with pre-stored information and determining whether the received result matches pre-stored information; when the received result matches the pre-stored information, the server sending the connection-request-success message to the terminal device; when the received result does not match pre-stored information, the server sending the connection-request-failure message to the terminal device.

In some embodiments, prior to the step of the server receiving the request for connecting to the virtual SIM card from the terminal device, the method further includes: the server obtaining an user ID and determining whether there is a subscription relationship between the user ID and the virtual SIM card identifier; when it is determined that there is no subscription relationship between the user ID and the virtual SIM card identifier, the server sending a message to the terminal device to deny the request for connecting to the virtual SIM card; and when it is determined that there is a subscription relationship between the user ID and the virtual SIM card identifier, the server executing a procedure obtained from the terminal device to fulfill the request for connecting the virtual SIM card.

In some embodiments, prior to the step of determining whether there is a subscription relationship between the user ID and the virtual SIM card identifier, the method further includes: the server receiving a request for subscribing to the virtual SIM card from the terminal device, the request for subscribing to the virtual SIM card includes the user ID and the virtual SIM card identifier; the server generating an order based on the user ID and the virtual SIM card identifier and sending an order number of the order to the terminal device, the order includes the user ID and the virtual SIM card identifier; the server receiving a payment result notification from a third-party payment service, the payment result notification includes the order number; the server determining whether a payment for the order is successful based on the payment result notification; when the payment is successful, the server obtaining the user ID and the virtual SIM card identifier in the corresponding order based on the order number in the payment result notification, establishing the subscription relationship between the user ID and the virtual SIM card identifier, and sending the subscription-success message to the terminal device; when the payment is unsuccessful, the server sending a continue-to-pay or cancel-the-order message to the terminal device.

In some embodiments, the user ID includes one or more of: a username; gender; ID card information; and fee account information. The SIM card identifier includes one or more of: a card number; a secret key, and authorization information. In some embodiments, the terminal device includes: a mobile phone, a wearable device, a tablet, a computer or a vehicle-based system.

According to yet another aspect of the disclosure, a method for performing multi-terminal mapping of a virtual SIM card by a terminal device is provided. The method includes: the terminal device sending a request for connecting to a virtual SIM card to a server; when the request for connecting the virtual SIM card is authenticated, the terminal device obtaining a connection-request-success message from the server in order to connect the virtual SIM card; when the request for connecting the virtual SIM card is not authenticated, the terminal device obtaining a connection-request-failure message from the server.

In some embodiments, prior to the step of sending the request for connecting to the virtual SIM card to the server, the method further includes: the terminal device sending a user ID to the server; when the terminal device obtaining a message indicating the terminal device has no right to request for connecting to the virtual SIM card, the terminal device terminating the process; when the terminal device does not obtain the message indicating the terminal device has no right to request for connecting to the virtual SIM card, the terminal device sending a request for connecting to the virtual SIM card to the server.

In some embodiments, the method further includes: the terminal device sending a request for subscribing to a virtual SIM card to the server, the request for subscribing to the virtual SIM card includes the user ID and the virtual SIM card identifier; the terminal device obtaining an order number of the order from the server, the order includes the user ID and the virtual SIM card identifier; the terminal device sending a payment request to a third-party payment service based on the order number, the payment request includes the order number; when the payment is successful, the terminal device obtaining a subscription-success message from the server; when the payment is unsuccessful, the terminal device obtaining a continue-to-pay or cancel-the-order message from the server.

In some embodiments, the user ID includes one or more of: a username; gender; ID card information; and fee account information. The SIM card identifier includes one or more of: a card number; a secret key, and authorization information. In some embodiments, the terminal device includes: a mobile phone, a wearable device, a tablet, a computer or a vehicle-based system.

Advantages of the disclosed techniques and devices can include the following. Unlike the existing techniques, the disclosed multi-terminal mapping system of the virtual SIM card and the associated method store one or more virtual SIM cards in the cloud so that one same virtual SIM card can be simultaneously read by multiple terminal devices and mapped to the multiple terminal devices. As a result, the multiple terminal devices mapped by the same virtual SIM card can have the same SIM card attribute, thereby allowing the multiple terminal devices to share the cloud resources and to simplify the operations related to a multi-terminal system sharing a virtual SIM card.

It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

FIG. 1 is a block diagram of a first exemplary multi-terminal mapping system based on a virtual SIM card according to an embodiment of the disclosure.
FIG. 2 is a block diagram of the terminal device according to the embodiment as illustrated in FIG. 1.
FIG. 3 is a block diagram of the server according to the embodiment as illustrated in FIG. 1.
FIG. 4 is a schematic diagram illustrating a connection between the terminal device and the cloud in FIG. 1 according to an embodiment of the disclosure.
FIGs. 5-8 present flowchart sillustrating various operations of a multi-terminal mapping system based on a virtual SIM card according to some embodiments of the disclosure.
FIG. 9 is a block diagram of a second exemplary multi-terminal mapping system based on a virtual SIM card according to an embodiment of the disclosure.

### DETAILED DESCRIPTION

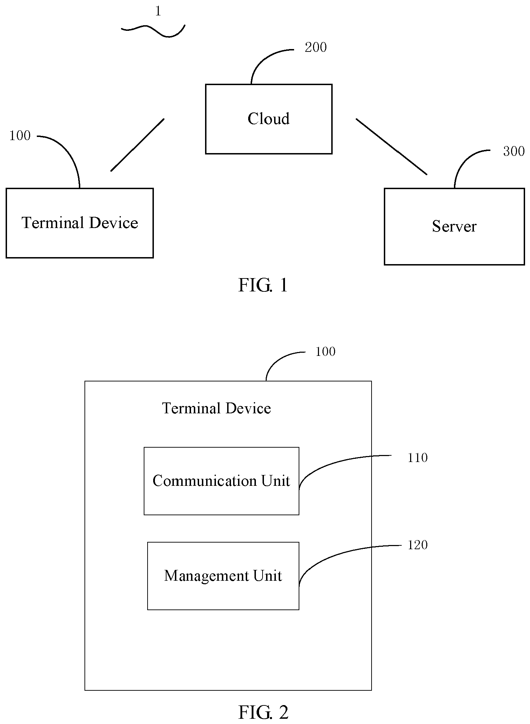

Referring to FIG. 1, which is a block diagram of a first exemplary multi-terminal mapping system 1 based on a virtual SIM card according to an embodiment of the disclosure. As shown in FIG. 1, the multi-terminal mapping system 1 of the virtual SIM card includes a terminal device 100, a cloud 200, and a server 300.

FIG. 2 is a block diagram of terminal device 100 as illustrated in the embodiment of the multi-terminal mapping system 1 in FIG. 1. As shown in FIG. 2, terminal device 100, which may include a mobile phone, a wearable device, a tablet, a computer or an vehicle-based system, further includes a communication unit 110 configured to transmit a request for connecting to a virtual SIM card and receive a SIM-card-connection-success message or a SIM-card-connection-failure message; amanagement unit 120 configured to connect to the virtual SIM card after communication unit 110 receives the SIM-card-connection-success message.

It can be understood that terminal device 100 also includes a processor and a memory, the memory may be configured to store communication unit 110 and management unit 120, and the processor may be configured to execute the functions of communication unit 110 and management unit 120.

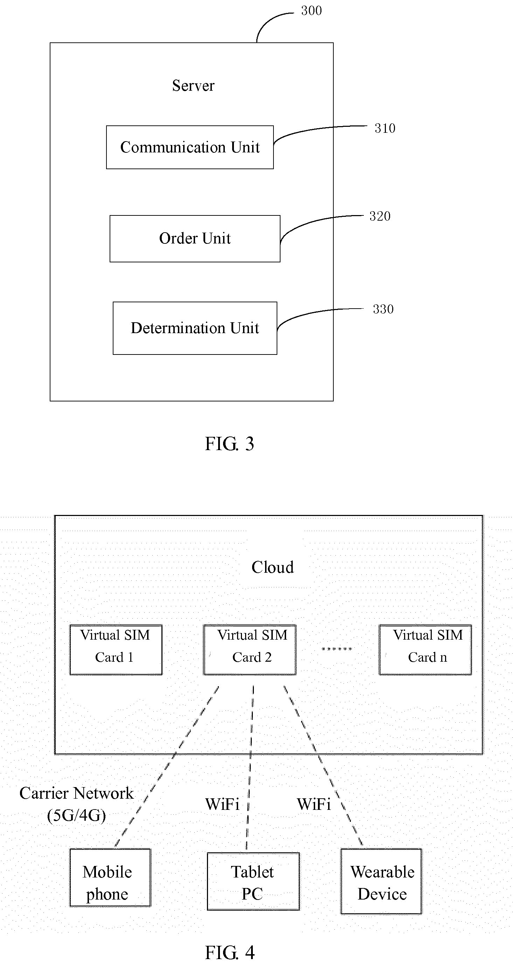

FIG. 3 is a block diagram of server 300 according to the embodiment as illustrated in FIG. 1. As shown in FIG. 3, server 300 of the present disclosure includes: a communication unit 310 configured to receive a request for subscribing to a virtual SIM card, receive a request for connecting to the virtual SIM card, and receive a payment result notification from a third-party payment server as a feedback to a payment request. In some embodiments, both the payment request and the payment result notification include an order number, and the request for subscribing to the virtual SIM card includes a user ID and a virtual SIM card identifier. Server 300 also includes an order unit 320 configured to generate an order based on the user ID and the virtual SIM card identifier and send the order number of the order to terminal device 100. In some embodiments, the order includes the user ID and the virtual SIM card identifier. Server 300 additionally includes a determination unit 330 configured to determine whether the payment is successful based on the payment result notification. If the payment is successful, determination unit 330 may be configured to obtain the user ID and the virtual SIM card identifier in the corresponding order based on the order number in the payment result notification, establish a subscription relationship between the user ID and the virtual SIM card identifier, and transmit a subscription-success message to terminal device 100. If the payment is not successful, determination unit 330 may be configured to transmit a continue-to-pay or a cancel-the-order message. Determination unit 330 may be further configured to determine whether the request for connecting to the virtual SIM card has been authenticated, if the request for connecting to the virtual SIM card is authenticated, send a connection-request-success message to terminal device 100 to connect terminal device 100 and the virtual SIM card; and if the request for connecting to the virtual SIM card is not authenticated, send a connection-request-failure message to terminal device 100. By determining the subscription relationship between the user ID and the virtual SIM card identifier, the disclosed system may ensure that only an authorized user, i.e., a user who has subscribed to the virtual SIM card, can use the virtual SIM card.

In some embodiments, determination unit 330 may be configured to receive a request for connecting to the virtual SIM card from terminal device 100 and subsequently generate a random code based on the received request and transmit the random code to the virtual SIM card. The virtual SIM card may generate a result based on the received random code and may transmit the result to server 300 to cause server 300 to compare the received result with pre-stored information to determine whether they match. When the received result matches the pre-stored information, server 300 may transmit a connection-request-success message to terminal device 100 to connect terminal device 100 with the virtual SIM card. When the received result does not match the pre-stored information, server 300 may transmit a connection-request-failure message to terminal device 100.

It can be understood that server 300 also includes a processor and a memory, the memory may be configured to store communication unit 310, order unit 320, and determination unit 330, and the processor may be configured to execute the functions of communication unit 310, order unit 320, and determination unit 330.

In some embodiments, the above-described user ID includes one or more of: a username; gender; ID card information; and fee account information. The above-described SIM card identifier may include one or more of: a card number; a secret key, and authorization information. In some embodiments, terminal device 100 may include: a mobile phone, a wearable device, a tablet, a computer or a vehicle-based system. In some embodiments, the communication network between terminal device 100 and server 300 can include one of: a carrier network (e.g., 5G/4G/3G networks etc.), a wireless network, such as Wi-Fi, or a wired network (e.g., a broadband network).

Referring to FIG. 4, which shows a schematic diagram illustrating a connection between terminal device 100 and cloud 200 in FIG. 1 according to an embodiment of the disclosure. As shown in FIG. 4, each of the virtual SIM cards (i.e.,virtual SIM card 1, virtual SIM card 2, ..., virtual SIM card n) is stored in a designated space in cloud 200, and the location of each of the virtual SIM cards has a location number which corresponds to the card number of the corresponding virtual SIM card so that a user of a virtual SIM card can easily locate that virtual SIM card. As can be seen in FIG. 4, a number of different types of terminal devices, such as mobile phones, wearable devices, networked smart in-vehicle systems, and Internet of Things smart devices can simultaneously read the same virtual SIM card in cloud 200, that is, a single virtual SIM card can be mapped to multiple and different types of terminal devices. This system configuration may allow a user to virtualize a terminal device having user's own attributes from different regions and using different devices, and subsequently use the terminal device having user's own attributes to communicate. Note that, even if the user's phone is not with the user, the user can user a wearable device, a networked smart in-vehicle system, and other devices having the same attributes as the user's phone as the user's identification for communication. Because each of the terminal devices uses the same virtual SIM card, each of the terminal devices can have the same attributes. To distinguish the multiple terminal devices sharing the same virtual SIM card, the terminal devices can be distinguished based on their terminal types, locations, and utilities. For example, for a number of smart devices of user John sharing a single virtual SIM card, it is possible to distinguish these smart devices based on the device types, e.g., John's mobile phone, John's smart eyeglasses, John's vehicle communication system,etc. to distinguish the different devices. In some embodiments, multiple terminal devices sharing the same virtual SIM card can share cloud resources such as phone book, photos, videos, and other cloud-based information. As a result, when a particular terminal device, such as the mobile phone is not nearby or having trouble, the user can connect with the same virtual SIM card using another terminal device such as the tablet PC, thereby achieving the same communication capability and document review.

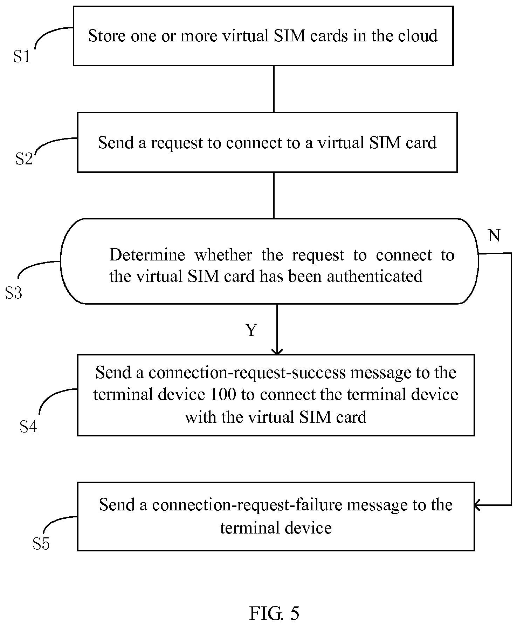

FIG. 5 presents a flowchart illustrating a method of mapping multiple terminals to a virtual SIM card according to an embodiment of the disclosure. The method of mapping multiple terminals to a virtual SIM card includes the following steps:
Step S1: store one or more virtual SIM cards in cloud 200;
Step S2: send a request for connecting to a virtual SIM card, and the request for connecting to the virtual SIM card includes a virtual SIM card identifier;
Step S3: determine whether the request for connecting to the virtual SIM card has been authenticated;
Step S4: if it is determined that the request for connecting to the virtual SIM card is authenticated, send a connection-request-success message to terminal device 100 to connect terminal device 100 with the virtual SIM card;
Step S5: if it is determined that the request for connecting to the virtual SIM card is not authenticated, send a connection-request-failure message to terminal device 100.

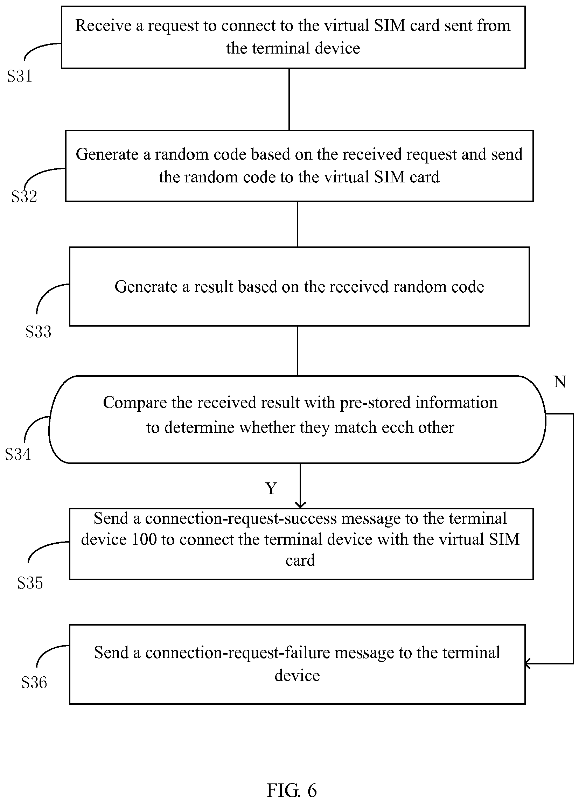

FIG. 6 is a flowchart illustrating a detailed embodiment of step S3 according to the embodiment as illustrated in FIG. 5. The method of FIG. 6 includes the following steps:
Step S31: receive a request for connecting to the virtual SIM card sent from terminal device 100;
Step S32: generate a random code based on the received request and send the random code to the virtual SIM card;
Step S33: generate a result based on the received random code;
Step S34: send the result to server 300 to cause server 300 to compare the received result with pre-stored information and to determine whether the received result matches the pre-stored information;
Step S35: if the received result matches the pre-stored information, send a connection-request-success message to terminal device 100 to connect terminal device 100 with the virtual SIM card;
Step S36: if the received result does not match the pre-stored information, send a connection-request-failure message to terminal device 100.

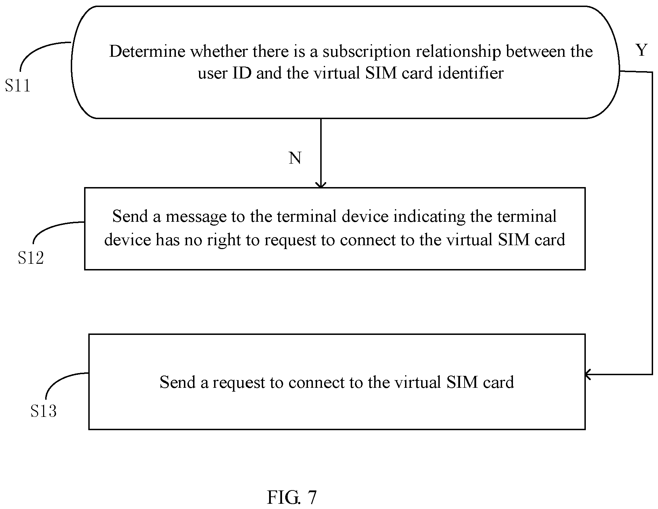

Referring to FIG. 7, the above-described process of subscribing to a virtual SIM card can be similar to an existing online shopping process. For example, a user can purchase a virtual SIM card from an online store of a virtual card vendor through a client-side terminal or a browser. FIG. 7 provides an exemplary ordering which can be placed between steps S1 and S2 in FIG. 5, this method including the steps of:
Step S11: determine whether there is a subscription relationship between a user ID and the virtual SIM card identifier;
Step S12: if there is no subscription relationship between the user ID and the virtual SIM card identifier, send a message to terminal device 100 indicating terminal device 100 has no right to request for connecting to the virtual SIM card;
Step S13: if there is a subscription relationship between the user ID and the virtual SIM card identifier, the process proceeds to step S2.

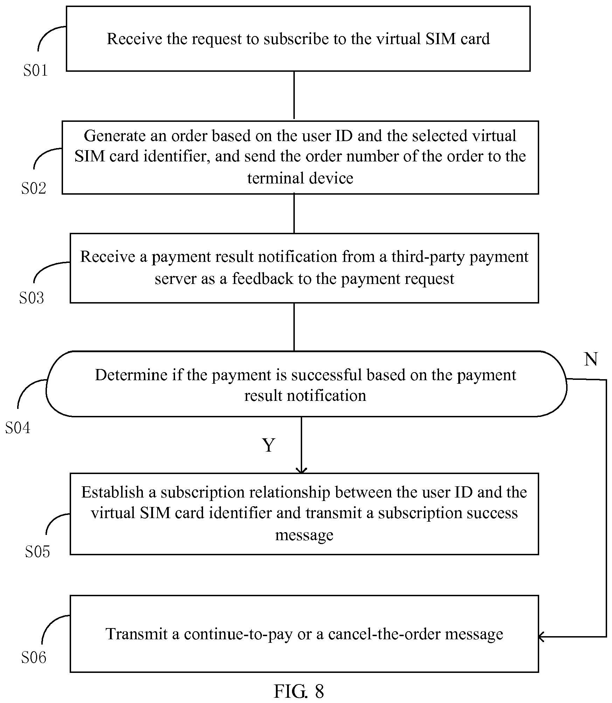

Referring to FIG.8, the method can further include steps prior to step 11 in FIG. 7, the steps include:
Step S01: receive the request for subscribing to the virtual SIM card, the request for subscribing to the virtual SIM card including the user ID and the virtual SIM card identifier;
   Specifically, the above-described the virtual card server 300 can display the available virtual SIM card identifiers to a user in advance through a network for the user to select. After the user makes a selection, server 300 may generate a user instruction which is then input into terminal device 100. Terminal device 100 subsequently may generate a request for subscribing to the virtual SIM card based on the user instruction and the user ID registered in advance by the user, and may transmit the request for subscribing to the virtual SIM card to the virtual card server 300.
Step S02: generate an order based on the user ID and the selected virtual SIM card identifier, and send the order number of the order to the terminal device 100, the order including the user ID and the virtual SIM card identifier;
   Specifically, the user ID and the virtual SIM card identifier may be recorded in the order, and the current status can be additionally recorded as "unpaid". The order number and the order may have a one-on-one correspondence.
Step S03: receive a payment result notification from a third-party payment server as a feedback to the payment request. In some embodiments, both the payment request and the payment result notification include the order number;
   Specifically, terminal device 100, after receiving the order number, may transmit a payment request to the third-party payment server. In some embodiments, the payment request includes the order number and the related information such as the bank account number. After executing a debit operation in accordance with the payment request, the third-party payment server may generate a payment result notification including the order number, and sends the payment result notification to the virtual card server 300.
Step S04: determine if the payment is successful based on the payment result notification;
Step S05: when the payment is successful, obtain the user ID and the virtual SIM card identifier in the corresponding order based on the order number in the payment result notification, and subsequently establish a subscription relationship between the user ID and the virtual SIM card identifier and transmit a subscription success message;
   Specifically, upon performing a successful payment, the virtual card server 300 may establish a corresponding subscription relationship based on the user ID and the virtual SIM card identifier in the corresponding order, and may transmit the virtual subscription success message to terminal device 100 to prompt the user to use the virtual SIM card.
Step S06: when the payment is not successful, transmit a continue-to-pay or a cancel-the-order message.

In some embodiments, the disclosed multi-terminal mapping system and method associated with a virtual SIM card can store one or more virtual SIM cards in the cloud so that a given virtual SIM card can be simultaneously read and mapped by multiple terminal devices, so that the multiple terminal devices mapped to the same virtual SIM card can have the same SIM card attributes to allow sharing cloud resources and to simplify processes of sharing a virtual SIM card with multiple terminals.

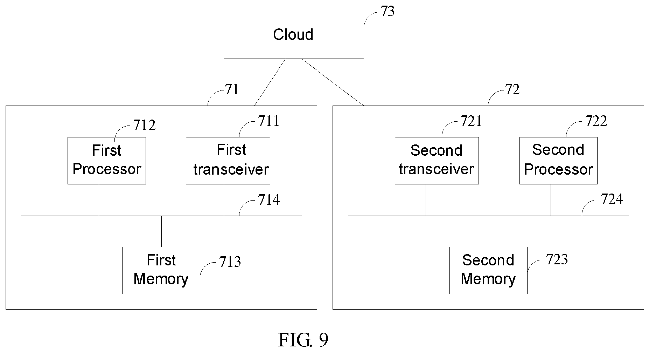

FIG. 9 is a block diagram of a second exemplary multi-terminal mapping system of a virtual SIM card according to an embodiment of the disclosure. As shown in FIG. 9, the second exemplary multi-terminal mapping system of the virtual SIM card includes a terminal device 71, a server 72, and a cloud 73.

Terminal device 71 includes a first transceiver 711, a first processor 712, a first memory 713, and a first bus 714. The first transceiver 711, the first processor 712, and the first memory 713 are interconnected via the first bus 714.

Server 72 includes a second transceiver 721, a second processor 722, a second memory 723, and a second bus 724. The second transceiver 721, the second processor 722, and the second memory 723 are interconnected via the second bus 724. Cloud 73 is used to store one or more virtual SIM cards.

Specifically, the first processor 712 may be configured to generate a request for subscribing to a virtual SIM card; the first transceiver 711 may be configured to send the request for subscribing to the virtual SIM card; the second transceiver 721 is configured to receive the request for subscribing to the virtual SIM card. In some embodiments, the request for subscribing to the virtual SIM card includes an user ID and a virtual SIM card identifier.

Specifically, the second processor 722 may be configured to generate an order based on the user ID and the virtual SIM card identifier associated with the request for subscribing to the virtual SIM card and send an order number of the order to the first transceiver 711 via the second transceiver 721. In some embodiments, the order includes the user ID and the virtual SIM card identifier.

Specifically, the first processor 712 may be configured to generate a payment request based on the order number, and the first transmitter may be configured to send the payment request to the third-party payment server 72 for performing the payment.

The second transceiver 721 may be configured to receive a payment result notification from the third-party payment server 72 as a feedback to the payment request. In some embodiments, both the payment request and the payment result notification include the order number, and the second processor 722 may be further configured to determine whether the payment is successful based on the payment result notification.

If the payment is successful, the second processor 722 may be configured to obtain the user ID and the virtual SIM card identifier from the corresponding order based on the order number, and subsequently establish a subscription relationship between the user ID and the virtual SIM card identifier. The second processor 722 may be further configured to generate a subscription-success message based on the subscription relationship and send the subscription-success message to terminal device 71 via the second transceiver 721. When the first transceiver 711 receives the subscription-success message, the first processor 712 may be further configured to generate a request for connecting to the virtual SIM card, and the first transceiver 711 may be configured to send the request for connecting to the virtual SIM card to the second transmitter.

Specifically, the second processor 722 may be further configured to determine whether the request for connecting to the virtual SIM card has been authenticated, and when the second processor 722 determines that the request for connecting to the virtual SIM card has been authenticated, the second processor 722 may be configured to generate a connection-request-success message and send the connection-request-success message to the first transceiver 711 via the second transceiver 721. The first processor 712 may be further configured to connect to the virtual SIM card in response to the connection-request-success message. However, when the second processor 722 determines that the request for connecting to the virtual SIM card has not been authenticated, the second processor 722 may be configured to generate a connection-request-failure message and send the connection-request-failure message to the first transceiver 711 via the second transceiver 721.

If the payment is not successful, the second processor 722 may be further configured to generate a continue-to-pay or a cancel-the-order message and send the continue-to-pay or cancel-the-order message to the first transceiver 711 via the second transceiver 721.

In some embodiments, the second transceiver 721 may receive a request for connecting to the virtual SIM card sent by terminal device 71. The second processor 722 is configured to generate a random code based on the request for connecting to the virtual SIM card and the second transceiver 721 is configured to send the random code to the virtual SIM card. The virtual SIM card may be configured to generate a result based on the received random code and the second transceiver 721 may be configured to receive the result. The second processor 722 may be configured to compare the received result with pre-stored information to determine whether they match. When the second processor 722 determines that the received result matches the pre-stored information, the second transceiver 721 may be configured to send the connection-request-success message to the first transceiver 711; when the second processor 722 determines that the received result does not match the pre-stored information, the second transceiver 721 may be configured to send the connection-request-failure message to the first transceiver 711.

In some embodiments, the first memory 713 may be used to store user IDs, virtual SIM card identifiers, and order numbers; the second memory 723 may be used for storing pre-stored information, user IDs, virtual SIM card identifiers, and orders.

The above-described embodiments are just some examples of the present disclosure and are not intended to limit the scope of the disclosed systems and methods. It should be understood that the equivalent structural variations or equivalent process variations of the described embodiments and the accompanying drawings, or direct or indirect applications of the described embodiments and the accompanying drawings in other relevant technical fields, are all included within the scope of the present disclosure.

While operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document and attached appendix should not be understood as requiring such separation in all embodiments.

Only a few implementations and examples are described and other implementations, enhancements and variations can be made based on what is described and illustrated in this patent document.

## Claims

1. A multi-terminal mapping system associated with a virtual SIM card, comprising:
a terminal device including a first transceiver, a first processor, and a first bus, wherein the first transceiver and the first processor are both coupled to the first bus;
a server including a second transceiver, a second processor, and a second bus, wherein the second transceiver and the second processor are both coupled to the second bus; and
a cloud configured to store one or more virtual SIM cards,
wherein the first processor is configured to generate a request for subscribing to a virtual SIM card, the first transceiver is configured to send the request for subscribing to the virtual SIM card, the second transceiver is configured to receive the request for subscribing to the virtual SIM card, and wherein the request for subscribing to the virtual SIM card comprises an user ID and a virtual SIM card identifier;
wherein the second processor is configured to generate an order based on the user ID and the virtual SIM card identifier associated with the request for subscribing to the virtual SIM card and send an order number of the order to the first transceiver via the second transceiver, wherein the order comprises the user ID and the virtual SIM card identifier;
wherein the first processor is configured to generate a payment request based on the order number, and the first transceiver is configured to send the payment request to a third-party payment server for performing the payment;
wherein the second transceiver is configured to receive a payment result notification from the third-party payment server as a feedback to the payment request, wherein both the payment request and the payment result notification comprise the order number, and wherein the second processor is further configured to determine whether the payment is successful based on the payment result notification; and
wherein when the payment is successful,
the second processor is further configured to:
obtain the user ID and the virtual SIM card identifier from the corresponding order based on the order number, and subsequently establish a subscription relationship between the user ID and the virtual SIM card identifier; and
generate a subscription-success message based on the subscription relationship and send the subscription-success message to the terminal device via the second transceiver;
when the first transceiver receives the subscription-success message, the first processor is further configured to generate a request for connecting to the virtual SIM card, and the first transceiver is configured to send the request for connecting to the virtual SIM card to the second transmitter;
wherein the second processor is further configured to determine whether the request for connecting to the virtual SIM card has been authenticated:
when the second processor determines that the request for connecting to the virtual SIM card has been authenticated,
the second processor is configured to generate a connection-request-success message and send the connection-request-success message to the first transceiver via the second transceiver; and
the first processor is configured to connect to the virtual SIM card in response to the connection-request-success message;
when the second processor determines that the request for connecting to the virtual SIM card has not been authenticated, the second processor is configured to generate a connection-request-failure message and send the connection-request-failure message to the first transceiver via the second transceiver;
wherein when the payment is not successful, the second processor is further configured to:
generate a continue-to-pay or a cancel-the-order message; and
send the continue-to-pay or cancel-the-order message to the first transceiver via the second transceiver.

2. The multi-terminal mapping system according to claim 1,
wherein the second transceiver is configured to receive the request for connecting to the virtual SIM card sent by the terminal device;
wherein the second processor is configured to generate a random code based on the request for connecting to the virtual SIM card and the second transceiver is further configured to send the random code to the virtual SIM card;
wherein the virtual SIM card is configured to generate a result based on the received random code and the second transceiver is configured to receive the result;
wherein the second processor is further configured to compare the received result with pre-stored information to determine whether they match:
when the second processor determines that the received result match the pre-stored information, the second transceiver is configured to send the connection-request-success message to the first transceiver;
when the second processor determines that the received result does not match the pre-stored information, the second transceiver is configured to send the connection-request-failure message to the first transceiver.

3. The multi-terminal mapping system according to claim 1,
wherein the user ID comprises one or more of: a username; gender; ID card information; and fee account information;
wherein the SIM card identifier comprises one or more of: a card number;a secret key, and authorization information; and
wherein the terminal device comprises: a mobile phone, a wearable device, a tablet, a computer, or a vehicle-based system.

4. A method for performing multi-terminal mapping of a virtual SIM card by a server, the method comprising:
the server storing one or more virtual SIM card in the cloud;
the server receiving a request for connecting to the virtual SIM card from a terminal device; and
the server determining whether the request for connecting to the virtual SIM card is authenticated:
when the request for connecting to the virtual SIM card is authenticated, the server sending a connection-request-success message to the terminal device for connecting the terminal device with the virtual SIM card;
when the request for connecting to the virtual SIM card is not authenticated, the server sending a connection-request-failure message to the terminal device.

5. The method according to claim 4, wherein the step of the server determining whether the request for connecting to the virtual SIM card is authenticated further comprises:
the server generating a random code based on the request for connecting to the virtual SIM card and sending the random code to the virtual SIM card;
the server receiving a result generated in response to the random code from the virtual SIM card; and
the server comparing the received result with pre-stored information and determining whether the received result matches pre-stored information:
when the received result matches pre-stored information, the server sending the connection-request-success message to the terminal device;
when the received result does not match pre-stored information, the server sending the connection-request-failure message to the terminal device.

6. The method according to claim 4, wherein prior to the step of the server receiving the request for connecting to the virtual SIM card from the terminal device, the method further comprises:
the server obtaining an user ID and determining whether there is a subscription relationship between the user ID and the virtual SIM card identifier;
when it is determined that there is no subscription relationship between the user ID and the virtual SIM card identifier, the server sending a message to the terminal device to deny the request toconnect to the virtual SIM card;
when it is determined that there is a subscription relationship between the user ID and the virtual SIM card identifier, the server executing a procedure obtained from the terminal device to fulfill the request for connecting the virtual SIM card.

7. The method according to claim 6, wherein prior to the step of determining whether there is a subscription relationship between the user ID and the virtual SIM card identifier, the method further comprises:
the server receiving a request for subscribing to the virtual SIM card from the terminal device, wherein the request for subscribing to the virtual SIM card comprises the user ID and the virtual SIM card identifier;
the server generating an order based on the user ID and the virtual SIM card identifier and sending an order number of the order to the terminal device, wherein the order comprises the user ID and the virtual SIM card identifier;
the server receiving a payment result notification from a third-party payment service, wherein the payment result notification comprises the order number;
the server determining whether a payment for the order is successful based on the payment result notification:
when the payment is successful, the server obtaining the user ID and the virtual SIM card identifier in the corresponding order based on the order number in the payment result notification, establishing the subscription relationship between the user ID and the virtual SIM card identifier, and sending the subscription-success message to the terminal device;
when the payment is unsuccessful, the server sending a continue-to-pay or cancel-the-order message to the terminal device.

8. The method according to claim 7,
wherein the user ID comprises one or more of: a username; gender; ID card information; and fee account information;
wherein the SIM card identifier comprises one or more of: a card number;a secret key, and authorization information; and
wherein the terminal device comprises: a mobile phone, a wearable device, a tablet, a computer, or a vehicle-based system.

9. A method for performing multi-terminal mapping of a virtual SIM card by a terminal device, the method comprising:
the terminal device sending a request for connecting to a virtual SIM card to a server; and
when the request for connecting the virtual SIM card is authenticated, the terminal device obtaining a connection-request-success message from the server in order to connect the virtual SIM card;
when the request for connecting the virtual SIM card is not authenticated, the terminal device obtaining a connection-request-failure message from the server.

10. The method according to claim 9, wherein prior to the step of sending the request for connecting to the virtual SIM card to the server, the method further comprises:
the terminal device sending a user ID to the server; and
when the terminal device obtaining a message indicating the terminal device has no right to request for connecting to the virtual SIM card, the terminal device terminating the process;
when the terminal device does not obtain the message indicating the terminal device has no right to request for connecting to the virtual SIM card, the terminal device sending a request for connecting to the virtual SIM card to the server.

11. The method according to claim 10, wherein prior to the step of sending the request for connecting to the virtual SIM card to the server, the method further comprises:
the terminal device sending a request for subscribing to a virtual SIM card to the server, wherein the request for subscribing to the virtual SIM card comprises the user ID and the virtual SIM card identifier;
the terminal device obtaining an order number of the order from the server, wherein the order comprises the user ID and the virtual SIM card identifier;
the terminal device sending a payment request to a third-party payment service based on the order number, wherein the payment request comprises the order number; and
when the payment is successful, the terminal device obtaining a subscription-success message from the server;
when the payment is unsuccessful, the terminal device obtaining a continue-to-pay or cancel-the-order message from the server.

12. The method according to claim 11,
wherein the user ID comprises one or more of: a username; gender; ID card information; and fee account information;
wherein the SIM card identifier comprises one or more of: a card number; a secret key, and authorization information; and
wherein the terminal device comprises: a mobile phone, a wearable device, a tablet, a computer, or a vehicle-based system.
